# EUROPÄISCHE PATENTSCHRIFT

(11) **EP 2 822 806 B1**
(45) Veröffentlichungstag und Bekanntmachung des Hinweises auf die Patenterteilung: **28.06.2017**
(21) Anmeldenummer: 13706221.2
(22) Anmeldetag: 19.02.2013
(51) Int. Cl.: B60L 11/18, B60L 15/00, H02P 25/22, H02P 25/024, H02M 3/156

(54) **FAHRZEUG MIT ELEKTRISCHER MASCHINE UND VERFAHREN ZUM BETREIBEN DIESER**
VEHICLE WITH ELECTRICAL MACHINE AND METHOD FOR OPERATING THE SAME
VÉHICULE POURVU D'UN MOTEUR ÉLECTRIQUE ET PROCÉDÉ PERMETTANT DE FAIRE FONCTIONNER LEDIT MOTEUR

(30) Priorität: 06.03.2012 DE 102012203525
(43) Veröffentlichungstag der Anmeldung: 14.01.2015
(73) Patentinhaber: Bayerische Motoren Werke Aktiengesellschaft, 80809 München (DE)
(72) Erfinder: FINDEISEN, Daniel, 85435 Erding (DE); GORKA, Matthias, 80935 München (DE); HECKER, Dominik, 80935 München (DE)
(86) Internationale Anmeldenummer: PCT/EP2013/053231
(87) Internationale Veröffentlichungsnummer: WO 2013/131738

(56) Entgegenhaltungen:
- DE-A1-102008 034 662
- DE-A1-102010 002 318
- US-A1- 2009 033 274

## Beschreibung

Die Erfindung betrifft ein Fahrzeug mit einer mehrphasigen elektrischen Maschine, mit einem ersten Teilbordnetz, das eine erste Nenngleichspannungslage aufweist, und mit einem zweiten Teilbordnetz, das eine zweite Nenngleichspannungslage aufweist, wobei die elektrische Maschine einen Rotor, ein erstes Statorsystem und ein zweites Statorsystem umfasst, das erste Teilbordnetz einen ersten Inverter mit einem ersten Zwischenkreiskondensator umfasst, das erste Statorsystem dem ersten Inverter zugeordnet ist, das zweite Teilbordnetz einen zweiten Inverter mit einem zweiten Zwischenkreiskondensator umfasst, und das zweite Statorsystem dem zweiten Inverter zugeordnet ist.

Üblicherweise werden in einem Fahrzeug Komponenten, die elektrische Energieverbraucher darstellen, von einem Energiebordnetz mit einer Nennspannungslage von 14 Volt versorgt. Ein sekundärer 12 V-Energiespeicher, der im Bordnetz je nach Betriebssituation die Funktion einer Energiequelle oder die Funktion einer Energiesenke übernimmt, und ein 14 V-Generator werden darauf ausgelegt, eine elektrische Leistung von 2-3 kW im Fahrzeug bereitzustellen.

Falls in das Bordnetz des Fahrzeugs mehrere Verbraucher mit höherem Leistungsbedarf integriert sind, kann das Bordnetz zwei Teilbordnetze aufweisen. Dann transferiert ein Gleichstromsteller elektrische Leistung zwischen den beiden Teilbordnetzen. Die elektrische Maschine, die bei einem Fahrzeug mit elektrifiziertem Antriebsstrang auch motorisch betreibbar sein kann, weist neben jeweils zumindest einem Energiespeicher je Teilbordnetz die Funktion als elektrische Energiequelle oder -senke im Fahrzeug auf. Eine solche Bordnetz-Topologie ist beispielsweise in der Schrift DE 102 44 229 A1 dargestellt.

Die Druckschrift D3 (US2009033274) wird als nächstliegender Stand der Technik angesehen und offenbart die Merkmale der Präambel des unabhängigen Anspruchs 1.

Es ist eine Aufgabe der Erfindung, ein verbessertes Fahrzeug mit einer elektrischen Maschine und zwei Teilbordnetzen und ein Verfahren zum Betreiben der elektrischen Maschine zu beschreiben.

Gelöst wird diese Aufgabe durch ein Fahrzeug gemäß Anspruch 1. Vorteilhafte Ausführungsformen und Weiterbildungen der Erfindung ergeben sich aus den abhängigen Ansprüchen.

Erfindungsgemäß sind das erste Statorsystem und das zweite Statorsystem jeweils in einer Sternschaltung ausgeführt und eine Transferschaltung verbindet den Sternpunkt des ersten Statorsystems mit dem Sternpunkt des zweiten Statorsystems.

Dies bedeutet, dass die beiden Sternpunkte der Statorsystem elektrisch direkt miteinander koppelbar sind.

Nach einer bevorzugten Ausführungsform der Erfindung umfasst die Transferschaltung eine erste Diode und eine zweite Diode, die gegenläufig und in Reihe geschaltet sind.

Weiterhin umfasst die Transferschaltung einen ersten Schalter, der der ersten Diode parallel geschaltet ist oder alternativ einen zweiten Schalter, der der ersten Diode parallel geschaltet ist.

Es ist auch besonders vorteilhaft, wenn die Transferschaltung den ersten Schalter, der der ersten Diode parallel geschaltet ist, und den zweiten Schalter, der der zweiten Diode parallel geschaltet ist, umfasst.

Die gegenläufig geschalteten Dioden stellen sicher, dass bei geöffnetem ersten Schalter und/oder bei geöffnetem zweiten Schalter die direkte elektrische Kopplung der beiden Sternpunkte unwirksam ist. Bei geschlossenem ersten Schalter und/oder bei geschlossenem zweiten Schalter besteht eine direkte elektrische Verbindung zwischen den beiden Sternpunkten in Form einer sehr niederohmigen Verbindung durch eine Reihenschaltung von zwei geschlossenen Schaltern oder eine Reihenschaltung eines Schalters und einer Diode.

Eine weitere Variante der Erfindung besteht darin, dass der erste Inverter drei High-Side-Schalter und drei Low-Side-Schalter aufweist, der zweite Inverter drei High-Side-Schalter und drei Low-Side-Schalter aufweist, die drei High-Side-Schalter des ersten Inverters und die drei Low-Side-Schalter des ersten Inverters pulsweitenmoduliert ansteuerbar sind, die drei High-Side-Schalter des zweiten Inverters und die drei Low-Side-Schalter des zweiten Inverters pulsweitenmoduliert ansteuerbar sind, die elektrische Maschine bei geöffnetem ersten Schalter und bei geöffnetem zweiten Schalter durch pulsweitenmodulierte Ansteuerung der High-Side-Schalter und der Low-Side-Schalter des ersten Inverters und des zweiten Inverters motorisch oder generatorisch oder in einem Mischbetrieb betreibbar ist. Den Low-Side-Schaltern und High-Side-Schaltern ist jeweils eine Low-Side-Diode bzw. eine High-Side-Diode parallel geschaltet.

Dies bedeutet, dass die Maschine bezüglich beider Bordnetze als Generator oder als Motor einsetzbar ist - unabhängig davon, ob die Maschine des jeweils anderen Bordnetzes zu dem gegebenen Betriebszeitpunkt als Motor oder als Generator eingesetzt ist. Bei dem Betrieb als Generator wird dem jeweiligen Bordnetz über das jeweilige Statorsystem elektrische Energie infolge eines dem Rotor von außen (z.B. von einem Verbrennungsmotor des Fahrzeugs) aufgeprägten Drehmoments zugeführt. Bei dem Betrieb als Motor wird dem jeweiligen Bordnetz über das jeweilige Statorsystem elektrische Energie entnommen und in Rotationsenergie des Rotors gewandelt, die von dem Rotor von außen (z.B. von einem riemengetriebenen Verbraucher des Fahrzeugs) als Drehmoment abgegriffen wird.

Besonders vorteilhaft ist es, wenn die erste Nennspannungslage die zweite Nennspannungslage in Richtung höherer Spannungslage gegenüber eine Referenzspannung im Fahrzeug, z.B. einer den beiden Teilbordnetzen gemeinsamen elektrischen Masse des Fahrzeugs, übersteigt, und die elektrische Maschine bei stillstehendem Rotor als Gleichspannungs-Tiefsetzsteller zwischen dem ersten Teilbordnetz und dem zweiten Teilbordnetz betreibbar ist.

Die elektrische Maschine ist dadurch als Gleichspannungs-Tiefsetzsteller betreibbar, dass im stationären Betrieb , d.h. sobald ein kontinuierlicher Stromfluss von einem Teilbordnetz zu dem anderen Teilbordnetz eingestellt ist, die Low-Side-Schalter des zweiten Inverters geöffnet werden, die High-Side-Schalter des zweiten Inverters geschlossen werden, die Low-Side-Schalter des ersten Inverters geöffnet werden, und die High-Side-Schalter des ersten Inverters pulsweitenmoduliert gesteuert werden.

Um Durchlassverluste zu reduzieren, können alternativ auch die Low-Side-Schalter des ersten Inverters komplementär zu den High-Side-Schaltern des ersten Inverters pulsweitenmoduliert gesteuert werden.

Hierbei ist zur Vermeidung eines Brückenkurzschlusses zwischen High- und Low-Side-Schalter eine Totzeit vorzusehen, in der beide High-Side- und Low-Side-Schalter geöffnet sind.

Zusätzlich kann die Erregerwicklung des Rotors elektrisch kurz geschlossen werden.

Wenn die High-Side-Schalter des ersten Inverters geschlossen sind, liegt über der wirksamen Induktivität, welche durch die 3 parallel geschalteten Induktivitäten des ersten Statorsystems in Reihe zu den 3 parallel geschalteten Induktivitäten des zweiten Statorsystems gebildet wird, die Spannungsdifferenz zwischen dem ersten Teilbordnetz und dem zweiten Teilbordnetz an. Während dieser Einschaltzeit steigt der Strom in der Induktivität linear an und dessen Mittelwert ist als Gleichstrom von einer Last abgreifbar. Während der Ausschaltphase baut die Induktivität den Energieinhalt ab, während der Zwischenkreiskondensator des zweiten Teilbordnetzes aufgeladen wird. Damit ein Freilauf für den Strom gebildet wird, können die Low-Side-Schalter des ersten Inverters entweder geschlossen werden oder geöffnet bleiben. In letzterem Fall leiten die Low-Side-Dioden des ersten Inverters.

Zur Verbesserung des Aufstartverhaltens des DC-DC-Betriebs, d.h. beim Übergang von drehendem Betrieb in einen Stillstandsbetrieb, können auch zunächst die Low-Side-Schalter des zweiten Inverters geschlossen und die High-Side-Schalter des zweiten Inverters geöffnet werden. Damit liegt über der wirksamen Induktivität die volle Spannung des ersten Teilbordnetzes statt der Differenz der Spannung zwischen dem ersten Teilbordnetz und dem zweiten Teilbordnetz, wodurch ein höherer Stromanstieg erreichbar ist. Der Übergang in den stationären Betrieb erfolgt geregelt durch pulsweitenmodulierten Betrieb der High-Side- und Low-Side-Schalter des zweiten Inverters.

Besonders vorteilhaft ist es zusätzlich, wenn die erste Nennspannungslage die zweite Nennspannungslage in Richtung höherer Nennspannungslage übersteigt, und die elektrische Maschine bei stillstehendem Rotor als Gleichstrom-Hochsetzsteller von dem zweiten Teilbordnetz zu dem ersten Teilbordnetz betreibbar ist.

Die elektrische Maschine ist dadurch als Gleichspannungs-Hochsetzsteller betreibbar, dass die Low-Side-Schalter des zweiten Inverters geöffnet werden, die High-Side-Schalter des zweiten Inverters geschlossen werden, die High-Side-Schalter des ersten Inverters geöffnet werden, und die Low-Side-Schalter des ersten Inverters pulsweitenmoduliert gesteuert werden. Zusätzlich kann die Erregerwicklung des Rotors elektrisch kurz geschlossen werden.

Zur Reduzierung von Durchlassverlusten können die High-Side-Schalter des ersten Inverters auch komplementär zu den Low-Side-Schaltern des ersten Inverters pulsweitenmoduliert gesteuert werden. Hierbei ist zur Vermeidung eines Brückenkurzschlusses zwischen High- und Low-Side-Schalter eine Totzeit vorzusehen, in der High-Side- und Low-Side-Schalter geöffnet sind.

Wenn die Low-Side-Schalter des ersten Inverters geschlossen werden, liegt über der wirksamen Induktivität, welche von den 3 parallel geschalteten Induktivitäten des ersten Statorsystems in Reihe zu den 3 parallel geschalteten Induktivitäten des zweiten Statorsystems gebildet wird, die Spannung des zweiten Teilbordnetzes an. Während dieser Einschaltzeit steigt der Strom linear an und die Induktivität baut Energieinhalt auf. Gleichzeitig sperren die High-Side-Dioden des ersten Inverters, so dass die Spannung am Zwischenkreiskondensator des ersten Teilbordnetzes nicht der Spannung des zweiten Teilbordnetzes angleichbar ist. Während der Ausschaltphase baut die Induktivität den Energieinhalt ab und der Zwischenkreiskondensator des ersten Teilbordnetzes wird aufgeladen. Dabei können die High-Side-Schalter des ersten Inverters entweder eingeschaltet werden oder ausgeschaltet bleiben. In letzterem Fall leiten die High-Side-Dioden des ersten Inverters.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung.

Im Einzelnen zeigen schematisch
Fig. 1 Fahrzeug mit elektrischer Maschine und zwei Teilbordnetzen nach dem Stand der Technik
Fig. 2 Fahrzeug mit elektrischer Maschine, zwei Teilbordnetzen und mit einer Transferschaltung geeignet für Buckbetrieb und mit der elektrischen Maschine in Normalbetrieb
Fig. 3 Fahrzeug mit elektrischer Maschine, zwei Teilbordnetzen und mit einer Transferschaltung geeignet für Boostbetrieb und mit der elektrischen Maschine in Normalbetrieb
Fig. 4 Fahrzeug mit elektrischer Maschine, zwei Teilbordnetzen, mit einer Transferschaltung geeignet für Buckbetrieb und Boostbetrieb und mit der elektrischen Maschine in Normalbetrieb
Fig. 5 Fahrzeug mit elektrischer Maschine, zwei Teilbordnetzen, mit einer Transferschaltung geeignet für Buckbetrieb und Boostbetrieb und mit der elektrischen Maschine in Buckbetrieb
Fig. 6 Fahrzeug mit elektrischer Maschine, zwei Teilbordnetzen, mit einer Transferschaltung geeignet für Buckbetrieb und Boostbetrieb und mit der elektrischen Maschine in Boostbetrieb

Gleiche Bezugszeichen kennzeichnen gleiche technische Merkmale.

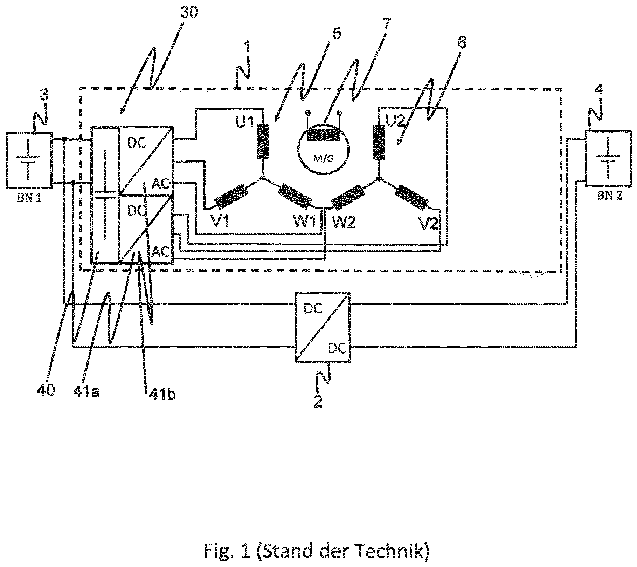

Für ein Zweispannungs-Bordnetz eines Fahrzeugs sind nach dem Stand der Technik im Wesentlichen zumindest vier Komponenten neben den beiden Bordnetzen erforderlich, siehe Fig. 1. Dies sind eine elektrische Maschine (1), ein Gleichstromsteller (2) zwischen den beiden Bordnetzen (BN1, BN2) und ein Energiespeicher in jedem der beiden Bordnetze (3,4). Die elektrische Maschine kann aus zwei 3-phasigen Statorsystemen bestehen, die im Wesentlichen identisch aufgebaut sein können. Die beiden Statorsysteme können auch um einen gewissen elektrischen Winkel zueinander verschaltet sein.

Das Bordnetz (BN2) kann beispielsweise ein konventionelles 12 V-Bordnetz sein und das Bordnetz (BN1) ein Bordnetz mit höherer Nennspannungslage. Alternativ können das Bordnetz (BN1) und das Bordnetz (BN2) eine vergleichbare Nennspannungslage von z.B. 400 V aufweisen, wenn etwa unterschiedliche Energiespeicher, z.B. eine Lithium-Ionen-Batterie und einen Doppelschichtkondensator, miteinander kombiniert werden. Beide Bordnetze weisen ein höheres elektrisches Potential auf, das im Wesentlichen jeweils durch die beiden Nennspannungslagen bestimmt ist, und ein niedrigeres elektrisches Potential, das beiden Bordnetzen gemeinsam ist und ggf. mit der Masse des Fahrzeugs verbunden ist. Die tatsächlichen Spannungslagen der jeweils höheren elektrischen Potentiale der beiden Bordnetze können zu einem beliebigen Betriebszeitpunkt von den jeweiligen Nennspannungslagen der beiden Bordnetze abweichen.

Der Gleichspannungssteller ermöglicht den uni- oder bidirektionalen Transfer von Leistung bzw. Energie zwischen den beiden Bordnetzen unabhängig vom Zustand der elektrischen Maschine.

Als elektrische Maschine kann nach dem Stand der Technik eine mehrphasige elektrische Maschine, z.B. eine 6-phasige Maschine mit zwei jeweils dreiphasigen Wicklungen in Sternschaltung (5,6), zum Einsatz kommen. Der Stator wird über ein Umrichtersystem (30) und einen Zwischenkreiskondensator (40) betrieben, wobei ein Gleichspannungs-Wechselspannungs-Wandler (41 a, 41 b) einem der beiden 3-phasigen Spulensysteme zugeordnet ist. Der Rotor (7) kann je nach Maschinenart entweder ausschließlich mit Permanentmagneten bestückt sein, eine Erregerwicklung mit induktivem Überträger und rotierendem Gleichrichter oder einem Schleifringsystem aufweisen oder als Kurzschluss-Käfigläufer ausgeführt sein. Die elektrische Maschine ist generatorisch (E-Betrieb) oder motorisch (M-Betrieb) betreibbar.

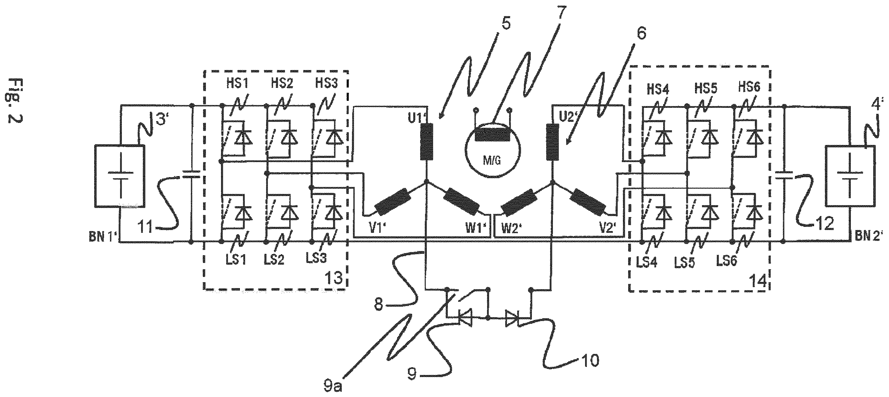

Ausführungsbeispiele der Erfindung gehen aus Fig. 2 bis 6 hervor. Es wird eine elektrische Maschine mit zwei 3-phasigen Spulensystemen in Sternschaltung (5,6) und einem Rotor (7) in ein Fahrzeug mit zumindest zwei Teilbordnetzen (BN1 BN2') integriert. Beide Teilbordnetze verfügen über jeweils zumindest einen elektrischen Energiespeicher (3',4'). Ferner weisen beide Bordnetze ein höheres elektrisches Potential auf, das im Wesentlichen jeweils durch die beiden Nennspannungslagen bestimmt ist, und ein niedrigeres elektrisches Potential, das beiden Bordnetzen gemeinsam ist und ggf. mit der Masse des Fahrzeugs verbunden ist. Die tatsächlichen Spannungslagen der jeweils höheren elektrischen Potentiale der beiden Bordnetze können zu einem beliebigen Betriebszeitpunkt von den jeweiligen Nennspannungslagen der beiden Bordnetze abweichen.

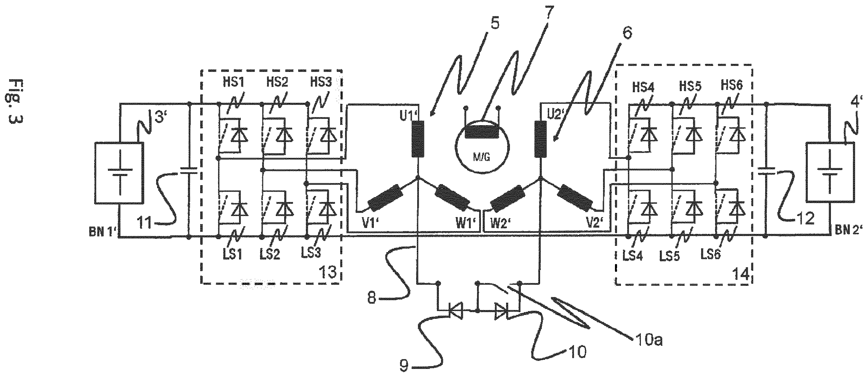

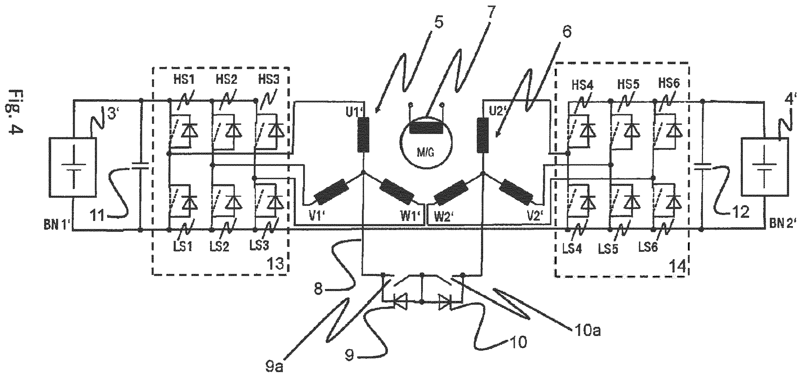

Die beiden Sternpunkte der beiden 3-phasigen Spulensysteme sind über einen elektrischen Pfad (8) direkt miteinander verschaltet, wobei der elektrische Pfad zwei gegenläufig, in Reihe verschaltete Dioden (9,10) und einen der Diode (9) (siehe Fig. 2) oder einen der Diode (10) (siehe Fig. 3) parallel geschalteten Schalter (9a, 10a) aufweist. Fig. 4 zeigt eine Konfiguration mit zwei Schaltern (9a,10a), die jeweils einer der Dioden (9,10) parallel geschaltet sind.

Jeweils eine Kombination aus Diode und parallelem Schalter kann als MOSFET oder als IGBT mit Freilaufdiode ausgeführt sein. Bei einem MOSFET wird die Diode von der Substratdiode des MOSFET gebildet. Der elektrische Pfad (8) ist derartig ausgestaltet, dass er zur Übertragung von elektrischer Leistung bis zu einer vorbestimmten Höhe ausgelegt ist. Dies kann beispielsweise über einen geeigneten Leitungsquerschnitt gewährleistet werden. Alternativ können auch mehrere elektrische Pfade, wobei ein elektrischer Pfad der Ausgestaltung des elektrischen Pfades (8) entspricht, parallel geschaltet werden, um die Stromträgfähigkeit zu erhöhen.

Die beiden 3-phasigen Spulensysteme werden jeweils über eine Parallelschaltung aus einem Zwischenkreiskondensator (11,12) und einem Umrichter (13,14) angesteuert.

In Fig. 2 bis 6 ist das BN1' über den Zwischenkreiskondensator (11) und den Umrichter (13) mit dem Statorsystem (5) verbunden, das BN2' über den Zwischenkreiskondensator (12) und den Umrichter (14) mit dem Statorsystem (6).

Die Zwischenkreiskondensatoren (11,12) liefern den hochfrequenten Wechselanteil der Maschinenströme und glätten die Ausgangsspannung der Maschine im generatorischen Betrieb. Dadurch können Oberwelligkeiten in beiden Bordnetzen reduziert werden.

Die beiden Umrichter (13,14) umfassen jeweils sechs Schalter mit parallel geschalteten Freilaufdioden (HS1,HS2,HS3,LS1,LS2,LS3,HS4,HS5,HS6,LS4,LS5,LS6). Ohne Beschränkung der Allgemeinheit sind die Schalter-Freilaufdioden-Kombinationen als MOSFETs ausgeführt, die auch als Leistungsschalter bezeichnet werden. Bevorzugt werden auch IGBTs mit Freilaufdiode bei Bordnetzen mit hoher Nennspannungslage (insbesondere >> 100 V) eingesetzt. Die Schalter sind in einer dem Fachmann bekannten Halbbrückenschaltung eines Wechselrichters mit dem jeweiligen Spulensystem verbunden. Der Inverter (13) umfasst drei Halbbrücken, wobei die erste Halbbrücke von den MOSFETs (HS1, LS1) gebildet wird, die zweite Halbbrücke von den MOSFETs (HS2, LS2) gebildet wird und die dritte Halbbrücke von den MOSFETs (HS3, LS3) gebildet wird. Der Inverter (14) umfasst drei Halbbrücken, wobei die erste Halbbrücke von den MOSFETs (HS4, LS4) gebildet wird, die zweite Halbbrücke von den MOSFETs (HS5,LS5) gebildet wird und die dritte Halbbrücke von den MOSFETs (HS6,LS6) gebildet wird.

Jene Leistungsschalter die mit dem höheren Potential des jeweiligen Bordnetzes verbunden sind (HS1, HS2, HS3, HS4, HS5, HS6), werden High-Side-Schalter genannt. Jene Leistungsschalter die mit dem niedrigeren Potential des jeweiligen Bordnetzes verbunden sind (LS1, LS2, LS3, LS4, LS5, LS6), werden Low-Side-Schalter genannt. Die dem Sternpunkt abgewandten Spulenseiten der Spulensysteme sind jeweils mit einer Halbbrücke des jeweiligen Inverters verbunden, d.h. die Spulen sind an dieser Spulenseite mit dem elektrischen Potential verbunden, das jeweils zwischen den Leistungsschaltern einer Halbbrücke besteht. Beispielsweise ist beim Schließen des Schalters (LS6) des Inverters (14) die Spule (W2') mit dem niedrigeren Potential des Bordnetzes (BN2') verbindbar und beim Schließen des Schalters (HS5) des Inverters (14) die Spule (V2') mit dem höheren Potential des Bordnetzes (BN2') verbindbar.

Die Schalter und Freilaufdioden verfügen über eine ausreichende Sperrspannungsfestigkeit, die z.B. dem doppelten Wert der Nennspannungslage des Bordnetzes entspricht, welchem der Inverter zugeordnet ist.

In den Ausführungsbeispielen nach Fig. 2 bis 6 ist das BN2' ohne Beschränkung der Allgemeinheit als konventionelles 14 V-Bordnetz ausgeführt. Der Energiespeicher (4) kann etwa eine Blei-Säure-Batterie in AGM-Technologie mit 12 V Nennspannungslage sein. Das BN1' befindet sich auf einer im Vergleich zum BN2' höheren Nennspannungslage von 48 V mit einem 48 V-Energiespeicher, der beispielsweise in Lithium-Ionen-Technologie ausgeführt sein kann. Bezüglich der Spannungslagen von BN1' und BN2' sowie der jeweiligen Energiespeicher sind beliebige Konfigurationen denkbar, wobei die Nennspannungslage von BN1' die Nennspannungslage von BN2' übersteigt.

Die beiden 3-phasigen Statorsysteme (5,6) sind den Nennspannungslagen der beiden Bordnetze (BN1 BN2') beispielsweise über eine unterschiedliche Wicklungszahl der Spulen (U2', V2', W2') im Vergleich zu den Spulen (U1', V1', W1') auslegungsgemäß angepasst. Dies bedeutet, dass das Spulensystem (U2',V2',W2') im Vergleich zum Spulensystem (U1',V1',W1') niederohmiger ausgeführt ist, um bei vergleichbarem Leistungsumsatz bei im Mittel geringerer Spannungslage und im Mittel erhöhten Strömen die Verlustleistung zu reduzieren.

Gemäß den Fig. 2 bis 4 ist die elektrische Maschine bei geöffneten Schaltern (9a, 10a) betreibbar. Dabei wird keine Leistung zwischen den Bordnetzen (BN1 und (BN2') transferiert, dieser Betrieb wird als Normalbetrieb bezeichnet. Aufgrund der Sperrwirkung der beiden Substratdioden der MOSFETs (9,10) sind die Sternpunkte elektrisch entkoppelt und die elektrische Maschine ist motorisch oder generatorisch betreibbar. Die Ansteuerung der beiden Statorsysteme erfolgt beispielsweise durch eine 3-phasige, pulsweitenmodulierte Ansteuerung der Inverter (13,14) mittels feldorientierter Regelung und z.B. Raumzeigermodulation der Schaltstellungen der Low-Side-Schalter und der High-Side-Schalter der Inverter. Die pulsweitengesteuerte Schaltstellung der Leitungsschalter ist in den Fig. 1 bis 4 durch gestrichelte Darstellungen der Schaltstellungen angedeutet. Die Ansteuerung kann beispielsweise durch einen Mikroprozessor oder FPGA erfolgen. Die Vorgabe von Parameterwerten wie z.B. von Drehmoment, Drehzahl, Spannung oder Leistung erfolgt beispielsweise durch ein Steuergerät des Fahrzeugs.

Bei geöffneten Schaltern (9a, 10a) ist die elektrische Maschine auch im Mischbetrieb betreibbar, d.h. beispielsweise bezüglich des Bordnetzes (BN1') in motorischem Betrieb und bezüglich des Bordnetzes BN2' in generatorischem Betrieb. Dies bedeutet, dass in diesem Fall Leistung vom Bordnetz (BN1 zum Bordnetz (BN2') transferiert wird. Dieser Leistungstransferbetrieb ist unabhängig davon durchführbar, ob an der Welle des Rotors ein Drehmoment von einem mechanischen Verbraucher abgegriffen oder der Welle ein Drehmoment von einem Motor aufgeprägt wird. Falls dem Rotor weder von außen ein Drehmoment entnommen noch ein Drehmoment aufgeprägt wird, wird bei laufender elektrischer Maschine ausschließlich Energie zwischen den beiden Teilbordnetzen transferiert.

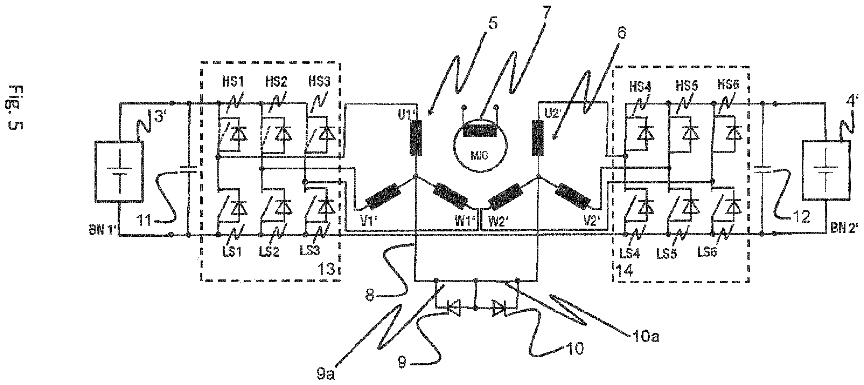

Nach einem weiteren Betriebszustand der elektrischen Maschine ist bei stillstehendem und unerregtem Rotor, d.h. ohne anliegende Erregerspannung am Rotor, die elektrische Maschine nach Fig. 2 und 4 als Tiefsetzsteller betreibbar, d.h. zum Transfer elektrischer Leistung des BN1' zum BN2'. Dieser Betrieb wird Buckbetrieb genannt und ist in Fig. 5 dargestellt.

Im Buckbetrieb sind gem. Fig. 5 in Kombination mit Fig. 4 die beiden Schalter (9a, 10a) dauerhaft geschlossen. Im Buckbetrieb für die Ausführungsform nach Fig. 2 ist der Schalter (9a) dauerhaft geschlossen. Dies bedeutet, dass im Buckbetrieb die beiden Sternpunkte auf dem gleichen elektrischen Potential liegen. Die Schalter (HS4,HS5, HS6) sind permanent geschlossen und die Schalter (LS4,LS5,LS6) sind permanent geöffnet, so dass die vom Sternpunkt abgewandten Spulenenden auf dem höheren Potential des Bordnetzes (BN2') liegen. Die Schalter (LS1, LS2, LS3) werden permanent geschlossen.

Zur Verbesserung des Aufstartverhaltens beim Übergang von drehendem Betrieb in den Stillstandsbetrieb können auch zunächst die Low-Side-Schalter (LS4, LS5, LS6) geschlossen und die High-Side-Schalter (HS4, HS5, HS6) geöffnet werden. Damit liegt über der wirksamen Induktivität die volle Eingangsspannung statt der Differenz der Ein- und Ausgangsspannung an, womit ein höherer Stromanstieg erreicht wird. Der Übergang in den stationären Betrieb erfolgt geregelt durch pulsweitenmodulierten Betrieb der High-Side- (HS4, HS5, HS6) und Low-Side-Schalter (LS5, LS5, LS6) des zweiten Inverters.

Zusätzlich kann der Erregerstromkreis des Rotors kurzgeschlossen werden, um sicherzustellen, dass der Rotor im Buckbetrieb stets bewegungsfrei verbleibt. Eine Bewegung des Rotors durch im induktiven System des Rotors elektromagnetisch induzierten Kräfte bedeutet einen unnötigen Energieverlust. Bei einer starren Verbindung der Rotorwelle mit beispielsweise der Kurbelwelle des Fahrzeugs oder einer Getriebewelle würden solche Induktionsbewegungen überdies ein in diesem Betriebszustand unerwünschtes Antriebsmoment des Fahrzeugs bedeuten.

Die Schalter (HS1,HS2,HS3) werden synchron pulsweitenmoduliert angesteuert. Da die Induktivitäten der einzelnen Phasen der Statorsysteme im Stillstand je nach Rotorlage aufgrund von Restmagnetisierung durch ggf. vorhandene Magnete oder Remanenz im Statorblech unterschiedlich groß sein können, kann auch das pulsweitenmodulierte Tastverhältnis der Schalter (HS1 ,HS2,HS3) unterschiedlich groß sein. Die Schalter (LS1 ,LS2, LS3) werden permanent geöffnet oder komplementär zu den Schaltern (HS1 ,HS2,HS3) betrieben. Die Ansteuerung des Inverters (13) kann beispielsweise durch einen Mikroprozessor oder ein FPGA erfolgen, die Vorgabe von Spannung, Strom oder Leistung kann beispielsweise von einem Steuergerät des Fahrzeugs erfolgen.

Komplementäres Schalten bedeutet, dass in einer Halbbrücke High-Side- und Low-Side-Schalter wechselseitig eingeschaltet werden, z.B. wenn der High Side Schalter geschlossen ist, ist der Low Side Schalter geöffnet und umgekehrt.

Komplementäres Schalten bewirkt geringere Durchlassverluste. Unter Durchlassverlusten ist zu verstehen, dass ein Strom durch eine nicht ideale, Leistungsverluste bewirkende Halbleiterstruktur fließt. Bei der Diode ergeben sich Verluste nach dem Produkt der Vorwärtsspannung der Halbleiterstruktur und dem durchfließenden Strom sowie nach dem Produkt aus dem temperaturabhängigen, differentiellen Bahnwiderstand und dem durchfließenden Strom im Quadrat. Beim Einsatz des MOSFETs als Schalter entstehen die Durchlassverluste nur durch das Produkt des Stroms im Quadrat und des temperaturabhängigen Durchlasswiderstands des MOSFETs im eingeschalteten Zustand. Bei Stromfluss durch den MOSFET statt durch die Diode ist der Gesamtdurchlassverlust somit geringer.

Als Tastverhältnis D_{BUCK} wird das Verhältnis aus Einschaltzeit T_{BUCK} und Periodendauer P_{BUCK} bezeichnet. Die Schaltfrequenz F_{BUCK} bezeichnet die Inverse der Periodendauer P_{BUCK}, die Einschaltzeit T_{BUCK} erreicht maximal die Periodendauer P_{BUCK}. Im Buckbetrieb resultiert im Bordnetz BN2' eine Spannung U_{BUCK,BN2'} mit *U_{BUCK,BN2'}* ∝ *D_{BUCK} · U*_{*BN*1},.

Alternativ ist neben einer synchronen pulsweitenmodulierten Ansteuerung auch eine um einen bestimmten Winkel versetzte pulsweitenmodulierte Ansteuerung möglich, die als Interleaved-Modus bezeichnet wird. Dabei werden die High-Side-Schalter (HS1, HS2, HS3) bei einem 3-phasigen Statorsystem um 120° phasenversetzt geschaltet. Am Spulensystem (U1', V1', W1') und/oder (U2', V2', W2') kann sich dadurch jedoch ein Drehfeld einstellen. Vorteilhaft ist, dass durch diese Ansteuermethode der Stromrippel am Zwischenkreiskondensator (12) reduzierbar ist.

Ist in dem gewählten Beispiel etwa die 12 V-AGM-Batterie des BN2' nahe ihrer Entladeschlussspannung von 10,5 V und der Li-Ionen-Speicher bei einer Spannungslage von nahe der seiner Nennspannungslage von 48 V ist die AGM-Batterie über den Li-Ionen-Speicher ladbar, indem durch Einstellung eines vorgegebenen, regelbaren Tastverhältnisses von 0,3 eine Soll-Ladespannung von 14,4 V an der AGM-Batterie eingestellt wird.

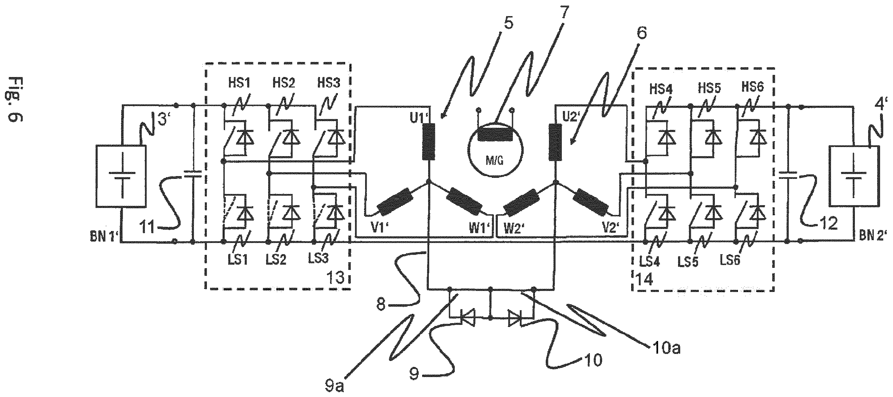

Bei stillstehendem und unerregtem Rotor, d.h. ohne anliegende Erregerspannung am Rotor, ist die elektrische Maschine nach Fig. 3 und 4 als Hochsetzsteller betreibbar, d.h. zum Transfer elektrischer Leistung des BN2' zum BN1'. Dieser Betrieb wird Boostbetrieb genannt und ist in Fig. 6 dargestellt.

Im Boostbetrieb sind gem. Fig. 6 in Kombination mit Fig. 4 die beiden Schalter (9a, 10a) dauerhaft geschlossen. Im Boostbetrieb für die Ausführungsform nach Fig. 3 ist der Schalter (10a) dauerhaft geschlossen Dies bedeutet, dass im Boostbetrieb die beiden Sternpunkte auf dem gleichen elektrischen Potential liegen. Die Schalter (HS4, HS5, HS6) sind permanent geschlossen und die Schalter (LS4, LS5, LS6) sind permanent geöffnet, so dass die vom Sternpunkt abgewandten Spulenenden auf dem höheren Potential des Bordnetzes (BN2') liegen. Die Schalterstellungen des Inverters (14) entsprechen also denen des Buckbetriebs. Zusätzlich kann der Erregerstromkreis des Rotors wie im Buckbetrieb kurzgeschlossen werden. Die Schalter (LS1, LS2, LS3) werden simultan pulsweitenmoduliert angesteuert. Da die Induktivitäten der einzelnen Phasen der Statorsysteme im Stillstand je nach Rotorlage aufgrund von Restmagnetisierung durch ggfs. vorhandene Magnete oder Remanenz im Statorblech unterschiedlich groß sein können, kann auch das pulsweitenmodulierte Tastverhältnis der Schalter (LS1, LS2, LS3) unterschiedlich groß sein.

Die Schalter (HS1, HS2, HS3) werden permanent geöffnet oder komplementär zu den Schaltern (LS1, LS2, LS3) angesteuert.

Als Tastverhältnis D_{BOOST} wird das Verhältnis aus Einschaltzeit T_{BOOST} und Periodendauer P_{BOOST} bezeichnet. Die Schaltfrequenz F_{BOOST} bezeichnet die Inverse der Periodendauer P_{BOOST}, die Einschaltzeit T_{BOOST} erreicht maximal die Periodendauer P_{BOOST}. Im Boostbetrieb resultiert im Bordnetz BN1' eine Spannung U_{BOOST,BN1'} mit *U*_{*BOOST,BN*1} ∝ (1/(1- *D_{BOOST}*)) · *U_{BN2'}*· Die den geöffneten Schaltern (HS1, HS2, HS3) parallel geschalteten Inverterdioden verhindern einen Spannungsverlust des Bordnetzes (BN1') zum Zeitpunkt geschlossener Schalter (LS1, LS2, LS3).

Alternativ ist neben einer synchronen pulsweitenmodulierten Ansteuerung auch eine um einen bestimmten Winkel versetzte pulsweitenmodulierte Ansteuerung möglich, die als Interleaved-Modus bezeichnet wird. Dabei werden die Low-Side-Schalter (LS1, LS2, LS3) bei einem 3-phasigen Statorsystem um 120° phasenversetzt geschaltet. Am Spulensystem (U1', V1', W1') und/oder (U2', V2', W2')kann sich dadurch jedoch ein Drehfeld einstellen. Vorteilhaft ist, dass durch diese Ansteuermethode der Stromrippel am Zwischenkreiskondensator (11) reduzierbar ist.

Ist in dem gewählten Beispiel etwa der 48 V-Li-Ionen-Speicher stark entladen und die AGM-Batterie zum gleichen Zeitpunkt mit einer Spannung von 12 V ausreichend geladen, ist der Li-Ionen-Speicher von der AGM-Batterie ladbar, indem durch Einstellung eines vorgegebenen, regelbaren Tastverhältnisses von 0,8 eine Soll-Ladespannung von 60 V an dem Li-Ionen-Speicher eingestellt wird. Falls der Li-Ionen-Speicher über eine hohe Ladungsaufnahme und dadurch über eine hohe Leistungsaufnahme verfügt, ist über das Maschinensteuergerät das ausgehend von 0,8 Tastverhältnis auf einen höheren Wert zu regeln, um bei zugleich sinkender Spannung der AGM-Batterie die Soll-Ladespannung von 60 V an dem Li-Ionen-Speicher aufrecht zu erhalten.

Pro Zeiteinheit ist mit steigendem Tastverhältnis D_{BUCK} bzw. Tastverhältnis D_{BOOST} bei konstanter Schaltfrequenz F_{BUCK} oder Schaltfrequenz F_{BOOST} mehr elektrische Energie von einem Bordnetz zum anderen Bordnetz übertragbar. Die am jeweils anderen Bordnetz anzulegende Spannung und damit auch die Übertragungsleistung im Buckbetrieb bzw. Boostbetrieb ist also über den Parameter Tastverhältnis regelbar.

Der Vorteil der Erfindung besteht darin, dass über die elektrische Maschine und die zum Betrieb der elektrischen Maschine genutzten Inverter eine mit einfachen Mitteln zwischen den Sternpunkten der beiden Spulensysteme integrierbare Schaltung Leistung zwischen den beiden Bordnetzen transferierbar ist. Dies bietet den Vorteil, dass ohne Nutzung eines Gleichstromstellers (2) wie in Fig. 1 Energie von einem Teilbordnetz des Fahrzeugs in das andere Teilbordnetz des Fahrzeugs transferierbar ist, ohne dass die Notwendigkeit besteht, dass die elektrische Maschine in Betrieb befindlich ist.

Ein weiterer besonderer Vorteil ist die Einstellbarkeit einer Energietransferrichtung (Buck- und/oder Boostbetrieb) basierend auf der Ausgestaltung der Transferschaltung mit entweder einem Schalter oder zwei Schaltern, die jeweils der ersten und/oder zweiten Diode parallel geschaltet sind.

Ist bidirektionaler Betrieb (Buck- und Boostbetrieb) erwünscht, werden zwei Schalter (9a und 10a) verwendet (siehe Fig. 4). Damit ist ein Stromfluss über die beiden geschlossenen Schalter (9a und 10a) in beide Richtungen von Bordnetz (BN1') zum Bordnetz (BN2') oder von Bordnetz (BN2') zum Bordnetz (BN1 möglich.

Falls lediglich ein Energietransfer von Bordnetz (BN1') zum Bordnetz (BN2') durchführbar sein soll, ist allein der Schalter (9a) ausreichend (siehe Fig. 2), der zur ersten Diode (9) parallel geschaltet ist. Damit ist ein Stromfluss über den geschlossenen Schalter (9a) und die in Flussrichtung gepolte Diode (10) von Bordnetz (BN1') zum Bordnetz (BN2') möglich.

Falls nur ein Energietransfer von Bordnetz (BN2') nach zum Bordnetz (BN1') durchführbar sein soll, ist allein der Schalter (10a) ausreichend (siehe Fig. 3), der zur zweiten Diode (10) parallel geschaltet ist. Damit ist ein Stromfluss über den geschlossenen Schalter (10a) und die in Flussrichtung gepolte Diode (9) von Bordnetz (BN2') nach Bordnetz (BN1 möglich.

## Patentansprüche

1. Fahrzeug mit einer mehrphasigen elektrischen Maschine, mit einem ersten Teilbordnetz (BN1'), das eine erste Nenngleichspannungslage aufweist, und mit einem zweiten Teilbordnetz (BN2'), das eine zweite Nenngleichspannungslage aufweist, wobei die elektrische Maschine einen Rotor (7), ein erstes Statorsystem (5) und ein zweites Statorsystem (6) umfasst, das erste Teilbordnetz (BN1') einen ersten Inverter (13) mit einem ersten Zwischenkreiskondensator (11) umfasst, das erste Statorsystem (5) dem ersten Inverter (13) zugeordnet ist, das zweite Teilbordnetz (BN2') einen zweiten Inverter (14) mit einem zweiten Zwischenkreiskondensator (12) umfasst, das zweite Statorsystem (6) dem zweiten Inverter (14) zugeordnet ist, das erste Statorsystem (5) in einer Sternschaltung ausgeführt ist, das zweite Statorsystem (6) in einer Sternschaltung ausgeführt ist, eine Transferschaltung den Sternpunkt des ersten Statorsystems (5) mit dem Sternpunkt des zweiten Statorsystems (6) verbindet, **dadurch gekennzeichnet, dass**
- die Transferschaltung eine erste Diode (9) und eine zweite Diode (10) umfasst, und die erste Diode (9) und die zweite Diode (10) gegenläufig in Reihe geschaltet sind und
- die Transferschaltung einen ersten Schalter (9a) umfasst, der zu der ersten Diode (9) parallel geschaltet ist und/oder einen zweiten Schalter (10a) umfasst, der zu der zweiten Diode (10) parallel geschaltet ist.

2. Fahrzeug nach Anspruch 1,
**dadurch gekennzeichnet, dass**
- die Transferschaltung ausschließlich den ersten Schalter (9a) umfasst, der der ersten Diode (9) parallel geschaltet ist.

3. Fahrzeug nach Anspruch 1,
**dadurch gekennzeichnet, dass**
- die Transferschaltung ausschließlich den zweiten Schalter (10a) umfasst, der der zweiten Diode (10) parallel geschaltet ist.

4. Fahrzeug nach Anspruch 1,
**dadurch gekennzeichnet, dass**
- der erste Schalter (9a) der ersten Diode (9) parallel geschaltet ist und der zweite Schalter (10a) der zweiten Diode (10) parallel geschaltet ist.

5. Fahrzeug nach Anspruch 2 oder 3,
**dadurch gekennzeichnet, dass**
- der erste Inverter (13) drei High-Side-Schalter (HS1, HS2, HS3) und drei Low-Side-Schalter (LS1, LS2, LS3) aufweist,
- der zweite Inverter (14) drei High-Side-Schalter (HS4, HS5, HS6) und drei Low-Side-Schalter (LS4, LS5, LS6) aufweist,
- die drei High-Side-Schalter (HS1,HS2,HS3) des ersten Inverters (13) und die drei Low-Side-Schalter (LS1,LS2,LS3) des ersten Inverters (13) pulsweitenmoduliert ansteuerbar sind,
- die drei High-Side-Schalter (HS4,HS5,HS6) des zweiten Inverters (14) und die drei Low-Side-Schalter des zweiten Inverters (14) pulsweitenmoduliert ansteuerbar sind,
- die elektrische Maschine bei geöffneten Schaltern (9a, 10a) motorisch oder generatorisch oder in einem Mischbetrieb durch pulsweitenmodulierte Ansteuerung der High-Side-Schalter (HS1,HS2,HS3) und Low-Side-Schalter (LS1,LS2,LS3) des ersten Inverters (13) und der High-Side-Schalter (HS4,HS5,HS6) und Low-Side-Schalter (LS4,LS5,LS6) des zweiten Inverters (14) betreibbar ist.

6. Fahrzeug nach Anspruch 4,
**dadurch gekennzeichnet, dass**
- der erste Inverter (13) drei High-Side-Schalter (HS1, HS2, HS3) und drei Low-Side-Schalter (LS1, LS2, LS3) aufweist,
- der zweite Inverter (14) drei High-Side-Schalter (HS4, HS5, HS6) und drei Low-Side-Schalter (LS4, LS5, LS6) aufweist,
- die drei High-Side-Schalter (HS1,HS2,HS3) des ersten Inverters (13) und die drei Low-Side-Schalter (LS1,LS2,LS3) des ersten Inverters (13) pulsweitenmoduliert ansteuerbar sind,
- die drei High-Side-Schalter (HS4,HS5,HS6) des zweiten Inverters (14) und die drei Low-Side-Schalter (LS4,LS5,LS6) des zweiten Inverters (14) pulsweitenmoduliert ansteuerbar sind,
- die elektrische Maschine bei geöffnetem ersten Schalter (9a) und bei geöffnetem zweiten Schalter (10a) motorisch oder generatorisch oder in einem Mischbetrieb durch pulsweitenmodulierte Ansteuerung der High-Side-Schalter (HS1,HS2,HS3) und Low-Side-Schalter (LS1,LS2,LS3), des ersten Inverters (13) und der High-Side-Schalter (HS4,HS5,HS6) und Low-Side-Schalter (LS4,LS5,LS6) des zweiten Inverters (14) betreibbar ist.

7. Fahrzeug nach Anspruch 2 oder 4,
**dadurch gekennzeichnet, dass**
- die erste Nennspannungslage die zweite Nennspannungslage in Richtung höherer Nennspannungslage übersteigt,
- die elektrische Maschine bei stillstehendem Rotor (7) ohne anliegende Erregerspannung als Gleichstrom-Tiefsetzsteller von dem ersten Teilbordnetz (BN1') und zu dem zweiten Teilbordnetz (BN2') im Buckbetrieb betreibbar ist.

8. Fahrzeug nach Anspruch 3 oder 4,
**dadurch gekennzeichnet, dass**
- die erste Nennspannungslage die zweite Nennspannungslage in Richtung höherer Nennspannungslage übersteigt, und
- die elektrische Maschine bei stillstehendem Rotor (7) ohne anliegende Erregerspannung als Gleichstrom-Hochsetzsteller von dem zweiten Teilbordnetz (BN2') zu dem ersten Teilbordnetz (BN1') im Boostbetrieb betreibbar ist.

9. Verfahren für ein Fahrzeug nach Anspruch 7, bei welchem
- die Low-Side-Schalter (LS4,LS5,LS6) des zweiten Inverters (14) geöffnet werden,
- die High-Side-Schalter (HS4,HS5,HS6) des zweiten Inverters (14) geschlossen werden,
- die Low-Side-Schalter (LS1,LS2,LS3) des ersten Inverters (13) geöffnet werden, und
- die High-Side-Schalter HS1 ,HS2,HS3) des ersten Inverters (13) pulsweitenmoduliert gesteuert werden.

10. Verfahren für ein Fahrzeug nach Anspruch 8, bei welchem
- die Low-Side-Schalter (LS4,LS5,LS6) des zweiten Inverters (14) geöffnet werden,
- die High-Side-Schalter (HS4,HS5,HS6) des zweiten Inverters (14) geschlossen werden,
- die High-Side-Schalter (HS1,HS2,HS3) des ersten Inverters (13) geöffnet werden, und
- die Low-Side-Schalter (LS1,LS2,LS3) des ersten Inverters (13) pulsweitenmoduliert gesteuert werden.

11. Verfahren nach Anspruch 9 oder 10,
**dadurch gekennzeichnet, dass**
- der Rotor (7) kurzgeschlossen ist.

## Claims

1. A vehicle with a polyphase electrical machine, comprising a first on-board sub-network (BN1'), which has a first nominal DC voltage level, and comprising a second on-board sub-network (BN2'), which has a second nominal DC voltage level, wherein the electrical machine comprises a rotor (7), a first stator system (5), and a second stator system (6), the first on-board sub-network (BN1') comprises a first inverter (13) having a first intermediate circuit capacitor (11), the first stator system (5) is associated with the first inverter (13), the second on-board sub-network (BN2') comprises a second inverter (14) having a second intermediate circuit capacitor (12), the second stator system (6) is associated with the second inverter (14), the first stator system (5) is configured in a star connection, the second stator system (6) is configured in a star connection, and a transfer circuit connects the star point of the first stator system (5) to the star point of the second stator system (6),
**characterised in that**
- the transfer circuit comprises a first diode (9) and a second diode (10), and the first diode (9) and the second diode (10) are connected in series in opposite directions, and
- the transfer circuit comprises a first switch (9a), which is connected in parallel to the first diode (9), and/or comprises a second switch (10a), which is connected in parallel to the second diode (10).

2. A vehicle according to claim 1,
**characterised in that**
- the transfer circuit comprises exclusively the first switch (9a), which is connected in parallel to the first diode (9).

3. A vehicle according to claim 1,
**characterised in that**
- the transfer circuit comprises exclusively the second switch (10a), which is connected in parallel to the second diode (10).

4. A vehicle according to claim 1,
**characterised in that**
- the first switch (9a) is connected in parallel to the first diode (9) and the second switch (10a) is connected in parallel to the second diode (10).

5. A vehicle according to claim 2 or claim 3,
**characterised in that**
- the first inverter (13) has three high-side switches (HS1, HS2, HS3) and three low-side switches (LS1, LS2, LS3),
- the second inverter (14) has three high-side switches (HS4, HS5, HS6) and three low-side switches (LS4, LS5, LS6),
- the three high-side switches (HS1, HS2, HS3) of the first inverter (13) and the three low-side switches (LS1, LS2, LS3) of the first inverter (13) can be controlled in a pulse-width modulated manner,
- the three high-side switches (HS4, HS5, HS6) of the second inverter (14) and the three low-side switches of the second inverter (14) can be controlled in a pulse-width modulated manner,
- when the switches (9a, 10a) are opened, the electrical machine can be operated as a motor or generator, or in a mixed mode, by pulse-width modulated control of the high-side switches (HS1, HS2, HS3) and low-side switches (LS1, LS2, LS3) of the first inverter (13) and of the high-side switches (HS4, HS5, HS6) and low-side switches (LS4, LS5, LS6) of the second inverter (14).

6. A vehicle according to claim 4,
**characterised in that**
- the first inverter (13) has three high-side switches (HS1, HS2, HS3) and three low-side switches (LS1, LS2, LS3),
- the second inverter (14) has three high-side switches (HS4, HS5, HS6) and three low-side switches (LS4, LS5, LS6),
- the three high-side switches (HS1, HS2, HS3) of the first inverter (13) and the three low-side switches (LS1, LS2, LS3) of the first inverter (13) can be controlled in a pulse-width modulated manner,
- the three high-side switches (HS4, HS5, HS6) of the second inverter (14) and the three low-side switches (LS4, LS5, LS6) of the second inverter (14) can be controlled in a pulse-width modulated manner,
- when the first switch (9a) is opened and the second switch (10a) is opened, the electrical machine can be operated as a motor or generator, or in a mixed mode, by pulse-width modulated control of the high-side switches (HS1, HS2, HS3) and low-side switches (LS1, LS2, LS3) of the first inverter (13) and of the high-side switches (HS4, HS5, HS6) and low-side switches (LS4, LS5, LS6) of the second inverter (14).

7. A vehicle according to claim 2 or claim 4,
**characterised in that**
- the first nominal voltage level exceeds the second nominal voltage level in the direction of higher nominal voltage level,
- when the rotor (7) is stationary, the electrical machine can be operated in buck mode as a DC step-down converter between the first on-board sub-network (BN1') and the second on-board sub-network (BN2') without application of exciting voltage.

8. A vehicle according to claim 3 or claim 4,
**characterised in that**
- the first nominal voltage level exceeds the second nominal voltage level in the direction of higher nominal voltage level, and
- when the rotor (7) is stationary, the electrical machine can be operated in boost mode as a DC step-up converter between the second on-board sub-network (BN2') and the first on-board sub-network (BN1') without application of exciting voltage.

9. A method for a vehicle according to claim 7, in which
- the low-side switches (LS4, LS5, LS6) of the second inverter (14) are opened,
- the high-side switches (HS4, HS5, HS6) of the second inverter (14) are closed,
- the low-side switches (LS1, LS2, LS3) of the first inverter (13) are opened,and
- the high-side switches (HS1, HS2, HS3) of the first inverter (13) are controlled in a pulse-width modulated manner.

10. A method for a vehicle according to claim 8, in which
- the low-side switches (LS4, LS5, LS6) of the second inverter (14) are opened,
- the high-side switches (HS4, HS5, HS6) of the second inverter (14) are closed,
- the high-side switches (HS1, HS2, HS3) of the first inverter (13) are opened, and
- the low-side switches (LS1, LS2, LS3) of the first inverter (13) are controlled in a pulse-width modulated manner.

11. A method according to claim 9 or claim 10,
**characterised in that**
- the rotor (7) is short-circuited.

## Revendications

1. Véhicule comprenant un moteur électrique multi-phasé équipé d'un premier réseau embarqué partiel (BN1') ayant un premier état de tension nominale et d'un second réseau embarqué partiel (BN2') ayant un second état de tension nominale, ce moteur comprenant un rotor (7), un premier système de stator (5) et un second système de stator (6), le premier réseau embarqué partiel (BN1') comprenant un premier inverseur (13) équipé d'un premier condensateur de circuit intermédiaire (11), le premier système de stator (5) étant associé au premier inverseur (13), le second réseau embarqué partiel (BN2') comprenant un second inverseur (14) équipé d'un second condensateur de circuit intermédiaire (12), le second système de stator (6) étant associé au second inverseur (14),
le premier système de stator (5) étant réalisé sous la forme d'un montage en étoile,
le second système de stator (6) étant réalisé sous la forme d'un montage en étoile,
un montage de transfert reliant le point étoile du premier système de stator (5) et le point étoile du second système de stator (6),
**caractérisé en ce que**
- le montage de transfert comprend une première diode (9) et une second diode (10), la première diode (9) et la seconde diode (10) étant branchées en série et opposées l'une à l'autre, et
- le montage de transfert comprend un premier commutateur (9a) qui est branché en parallèle sur la première diode (9) et/ou comprend un second commutateur (10a) qui est branché en parallèle sur la seconde diode (10).

2. Véhicule conforme à la revendication 1,
**caractérisé en ce que**
le montage de transfert comprend uniquement le premier commutateur (9a) qui est branché en parallèle sur la première diode (9).

3. Véhicule conforme à la revendication 1,
**caractérisé en ce que**
le montage de transfert comprend uniquement le second commutateur (10a) qui est branché en parallèle sur la seconde diode (10).

4. Véhicule conforme à la revendication 1,
**caractérisé en ce que**
le montage de transfert comprend :
le premier commutateur (9a) qui est branché en parallèle sur la première diode (9) et le second commutateur (10a) qui est branché en parallèle sur la seconde diode (10).

5. Véhicule conforme à la revendication 2 ou 3,
**caractérisé en ce que**
- le premier inverseur (13) comprend trois commutateurs côté haute tension (HS1, HS2, HS3) et trois commutateurs côté basse tension (LS1, LS2, LS3),
- le second inverseur (14) comprend trois commutateurs côté haute tension (HS4, HS5, HS6) et trois commutateurs côté basse tension (LS4, LS5, LS6),
- les trois commutateurs côté haute tension (HS1, HS2, HS3) du premier inverseur (13) et les trois commutateurs côté basse tension (LS1, LS2, LS3) du premier inverseur (13) peuvent être commandés par modulation de la largeur d'impulsion,
- les trois commutateurs côté haute tension (HS4, HS5, HS6) du second inverseur (14) et les trois commutateurs côté basse tension du second inverseur (14) peuvent être commandés par modulation de la largeur d'impulsion,
- lorsque les commutateurs (9a, 10a) sont fermés, le moteur électrique peut être actionné en tant que moteur ou en tant que générateur ou selon un mode de fonctionnement mixte par commande par modulation de la largeur d'impulsion des commutateurs côté haute tension (HS1, HS2, HS3) et des commutateurs côté basse tension (LS1, LS2, LS3) du premier inverseur (13) et des commutateurs côté haute tension (HS4, HS5, HS6) et des commutateurs côté basse tension (LS4, LS5, LS6) du second inverseur (14).

6. Véhicule conforme à la revendication 4,
**caractérisé en ce que**
- le premier inverseur (13) comprend trois commutateurs côté haute tension (HS1, HS2, HS3) et trois commutateurs côté basse tension (LS1, LS2, LS3),
- le second inverseur (14) comprend trois commutateurs côté haute tension (HS4, HS5, HS6) et trois commutateurs côté basse tension (LS4, LS5, LS6),
- les trois commutateurs côté haute tension (HS1, HS2, HS3) du premier inverseur (13) et les trois commutateurs côté basse tension (LS1, LS2, LS3) du premier inverseur (13) peuvent être commandés par modulation de la largeur d'impulsion,
- les trois commutateurs côté haute tension (HS4, HS5, HS6) du second inverseur (14) et les trois commutateurs côté basse tension (LS4, LS5, LS6) du second inverseur (14) peuvent être commandés par modulation de la largeur d'impulsion,
- lorsque le premier commutateur (9a) est ouvert et que le second commutateur (10a) est ouvert, le moteur électrique peut être actionné en tant que moteur ou en tant que générateur ou selon un mode de fonctionnement mixte par commande par modulation de la largeur d'impulsion des commutateurs côté haute tension (HS1, HS2, HS3) et des commutateurs côté basse tension (LS1, LS2, LS3) du premier inverseur (13) et des commutateurs côté haute tension (HS4, HS5, HS6) et des commutateurs côté basse tension (LS4, LS5, LS6) du second inverseur (14).

7. Véhicule conforme à la revendication 2 ou 4,
**caractérisé en ce que**
- le premier état de tension nominale dépasse le second état de tension nominale dans le sens d'un état de tension nominale plus élevé,
- lorsque le rotor (7) est à l'arrêt sans application d'une tension d'excitation, le moteur électrique peut être actionné selon un mode dévolteur en tant que convertisseur abaisseur en courant continu du premier réseau embarqué partiel (BN1') au second réseau embarqué partiel (BN2').

8. Véhicule conforme à la revendication 3 ou 4,
**caractérisé en ce que**
- le premier état de tension nominale dépasse le second état de tension nominale dans le sens d'un état de tension nominale plus élevé, et
- lorsque le rotor (7) est à l'arrêt sans application d'une tension d'excitation, le moteur électrique peut être actionné selon un mode survolteur en tant que convertisseur élévateur en continu du second réseau embarqué partiel (BN2') au premier réseau embarqué partiel (BN1').

9. Procédé de fonctionnement d'un véhicule conforme à la revendication 7,
selon lequel :
- les commutateurs côté basse tension (LS4, LS5, LS6) du second inverseur (14) sont ouverts,
- les commutateurs côté haute tension (HS4, HS5, HS6) du second inverseur (14) sont fermés,
- les commutateurs côté basse tension (LS1, LS2, Ls3) du premier inverseur (13) sont ouverts, et
- les commutateurs côté haute tension (HS1, Hs2, HS3) du premier inverseur (13) sont commandés par modulation de la largeur d'impulsion.

10. Procédé de fonctionnement d'un véhicule conforme à la revendication 8,
selon lequel :
- les commutateurs côté basse tension (LS4, LS5, LS6) du second inverseur (14) sont ouverts,
- les commutateurs côté haute tension (HS4, HS5, HS6) du second inverseur (14) sont fermés,
- les commutateurs côté haute tension (HS1, HS2, HS3) du premier inverseur (13) sont ouverts, et
- les commutateurs côté basse tension (LS1, LS2, LS3) du premier inverseur (13) sont commandés par modulation de la largeur d'impulsion.

11. Procédé conforme à la revendication 9 ou 10,
**caractérisé en ce que**
le rotor (7) est en court-circuit.
